# EUROPEAN PATENT APPLICATION

(11) **EP 1 978 655 A1**
(43) Date of publication of application: **08.10.2008**
(21) Application number: 07007124.6
(22) Date of filing: 04.04.2007
(51) Int. Cl.: H04B 10/158, H04B 10/08

(54) **Receiver for receiving optical signals form different sources and method**

(71) Applicant: Nokia Siemens Networks Oy, 02610 Espoo (FI)
(72) Inventor: Rehberg, Reinhard Dr., 17495 Sanz (DE)
(74) Representative: Bruglachner, Thomas E.

(57) **Abstract**

A receiver (50) for optical signals from different sources is described, comprising:
- a transducer unit that receives optical signals from at least two sources and that changes the received optical signals to electrical input signals (11),
- a detection unit (26) that detects values depending on the input signals (11, 72),
- a memory unit (30) that stores the detected values or values depending on the detected values,
- an adjustable unit (24) that processes the electrical input signals (11) depending on the stored values,
and a control unit (32) that controls the reading of values from the memory unit (30) corresponding to the signal source from which the current input signal (11) has come.

## Description

The invention relates to a receiver for receiving optical signals from different signal sources. The receiver comprises:
- a transducer unit that receives optical signals from at least two sources and that changes the received optical signals to electrical input signals, and
- a unit that processes the electrical input signals.

Such a receiver may, for instance, be used in a passive optical network (PON) where the receiver receives signals from a plurality of sources in time division multiplex (TDM). Each time slot may contain a burst signal. The signal level of signals or bursts from different sources may vary very much. Therefore, there is the problem of fast and reliable adjustment of the receiver after a change of signal sources, i. e. between the two successive time slots.
Furthermore, the bit error rate (BER) should be as low as possible. Moreover, the costs of a receiver should be as low as possible.

It is an object of the invention to develop a simple receiver that may be used for burst operation, especially with a low bit error rate. Furthermore, the invention relates to a method for receiving signals from different sources.

This object is solved by a method according to claim 1. Embodiments are given in the dependent claims.

The object is solved by a receiver for optical signals from different sources, comprising:
- a transformer unit that receives optical signals from at least two sources and that transforms the received optical signals to electrical input signals,
- a detection unit that detects values depending on the input signals,
- a memory unit that stores the detected values or values depending on the detected values,
- an adjustable unit that processes the electrical input signals depending on the stored values,
- and a control unit that controls the reading values from the memory unit corresponding to the signal source from which the current input signal has come.

The use of stored values for adjusting the receiver allows a very fast adjustment. Further adjustment is possible during the same burst or during the next burst from the same source. The fast adjustment results in an appropriate eye diagram and therefore in a very low bit error rate.

The transducer unit may be for instance a pin-diode (p doped, intrinsic, n doped) or an avalanche photo diode (APD). The optical signals may be electromagnetic waves. The wavelength of this waves is for instance in the range of 0,75 micron to 1,7 micron. The waves may be transmitted in an optical fibre, for instance in a glass fibre or in a plastic fibre. The detection unit detects a characteristic feature of the signal, for instance a peak value or a mean value. With the help of the characteristic feature further calculations are possible, for instance the mean value can be calculated from a maximum peak value and a minimum peak value. The value may be a digital value or an analogue value. The modulation scheme may be for instance not return to zero NRZ modulation, return to zero RZ modulation, etc.

The electrical signal may be, for instance, a voltage signal or a current signal. The signal frequency may be higher than 100 MHz (Mega Hertz) or higher than 1 GHz (Giga Hertz). The difference in the level of the signals from different sources may be more than 15 dB (decibel).

The adjustable unit may comprise a limiter amplifier or is a limiter amplifier. The adjustable unit may include a comparator or a combination of a comparator and an amplifier, i. e. a limiter amplifier. The comparator may include a differential amplifier or an operational amplifier. Especially, limiter amplifiers for the burst mode may advantageously use the invention. The adjustment may relate to the threshold of the comparator or to other parameters of the limiter amplifier.

The adjustable unit may comprise a comparator, a maximum peak detector or a positive peak detector, a minimum peak detector or a "negative" peak detector and a mean value detector. An input signal line is connected to an input of the comparator, to an input of the maximum peak detector and to an input of the minimum peak detector. An input of the mean value detector is connected to an output of the maximum peak detector and an other input of the mean value detector is connected to an output of the minimum peak detector. Another input of the comparator is connected with an output of the mean value detector. The maximum peak detector may comprise a first capacitor for determining the positive peak and the minimum peak detector may comprise a second capacitor for determining the minimum peak. The control unit also controls the precharging of the first capacitor and of the second capacitor depending on the stored values. One advantage of this embodiment is that a closed loop adjustment is possible within a burst. So it is possible to consider small deviations in the mean value in the same burst.

Alternatively the adjustable unit may comprise a comparator, a maximum peak detector, a minimum peak detector and a mean value detector. An input signal line is connected to an input of the comparator, to an input of the maximum peak detector and to an input of the minimum peak detector. An input of the mean value detector is connected to an output of the maximum peak detector and another input of the mean value detector is connected to an output of the minimum peak detector. An output of the mean value detector is connected to an input of the memory unit.
Another input of the comparator is connected to an output of the memory unit. This embodiment is simply to implement. There is a closed loop adjustment between successive bursts from the same source.

The receiver may include a preamplifier and the preamplifier may comprise the adjustable unit or may be the adjustable unit. It is possible, for instance, to adjust the amplification factor of the preamplifier. The preamplifier may be the first amplifier following an transducer as seen in the direction of the signal flow.

The receiver may also comprise a low pass filter and the adjustable unit may comprise the low pass filter or may be the low pass filter. It is possible, for instance ,to adjust the capacity of a capacitor in the low pass filter with the help of a switch that short-circuits the capacitor or a part of a series connection of capacitors depending on the stored values. Alternatively or additionally it is possible to precharge this capacitor depending on the stored values.

It is also possible to influence the receiver in other ways depending on the stored values, for instance by controlling current sources or voltage sources depending on the stored values.

The memory unit may comprise a digital memory or is a digital memory, for instance a random access memory (RAM). There may be an analogue to digital converter (ADC) between the detection unit and the digital memory unit. Furthermore, there may be a digital to analogue converter (DAC) between the memory unit and the adjustable unit.

The control unit may be a circuit without a digital processor. Alternatively, a digital processor may be used in the control unit. The control unit is able to determine which source transmits when. Therefore, the control is in the situation to assign stored values again to the same source compared with the source that transmitted the signal for the determination of the stored value.

The Receiver may comprise a manipulation unit that maps the detected values according to a predetermined mapping function to create mapped values that are stored in the memory. In the next cycle the stored values are used to adjust the adjustable unit. Alternatively, the manipulation unit maps the stored values and uses the mapped values directly for the adjustment of the adjustable unit.

This may result in the overlay of two control loops only at the beginning of a burst or alternatively within the whole burst.

The mapping may comprise a compression of the values. This can save memory space. Furthermore, this can be combined with other manipulations of the values in an easy way.

The mapping function can be a nonlinear function. Alternatively a linear mapping function can be used.

The mapping function may change depending on the input signals, for instance:
- depending on the length of bursts in the input signal, or
- depending on the signal level of the input signals. This may results in a better performance of the receiver.

The mapping function may also change depending on parameters of the receiver, for instance:
- depending on the temperature of a receiving element like a diode, or
- depending on the surrounding temperature of the receiver. This measurements result in a better performance of the receiver with regard to bit rate and BER.

The invention also relates to a method for receiving optical signals from different sources, comprising:
- receiving a first optical signal from a first signal source,
- transducing the first optical signal to a first electrical input signal,
- determining a first value depending on the first input signal,
- storing the first value,
- receiving a second optical signal from a second signal source after receiving the first signal,
- transducing the second optical signal to a second electrical input signal,
- receiving a third optical signal from the first source after receiving the second optical signal,
- transducing the third optical signal to a third electrical input signal,
- using the first value for processing the third input signal.

The OLT sends, for instance, a bandwidth map downstream to the ONTs. The ONTs use the bandwidth according to the bandwidth map for sending their bursts. There may be varying bitmaps for successive cycles. Especially, there may be changes of the starting time and stopping time for each burst in the cycle. The length of the burst may vary form ONT to ONT within a cycle or for a ONT from cycle to cycle. It is possible, that all or only a part of the ONT send bursts in a cycle.

The first value may be a precharge voltage for a capacitor or a threshold value for a comparator or an amplification factor for a preamplifier. Furthermore, a second value may be determined by the second signal and the second value also may be stored in a memory unit. Therefore, the same technical effects as described above for the receiver and its embodiments may be achieved.

As far as "may" is used in this application, this term shall have the meaning of an actual embodiment and/or also the technical possibility of doing so. The appending figures are for illustrative purposes only and are not intended to limit the scope of the invention. In the following some embodiments of the invention are described with reference to the figures, wherein:
- Figure 1: illustrates received signals,
- Figure 2: illustrates a part of a receiver,
- Figure 3: illustrates further embodiments of receivers,
- Figure 4: illustrates a limiter amplifier,
- Figure 5: illustrates manipulation depending on the signal level,
- Figure 6: illustrates manipulation by mapping, and
- Figure 7: illustrates manipulation depending on temperature.

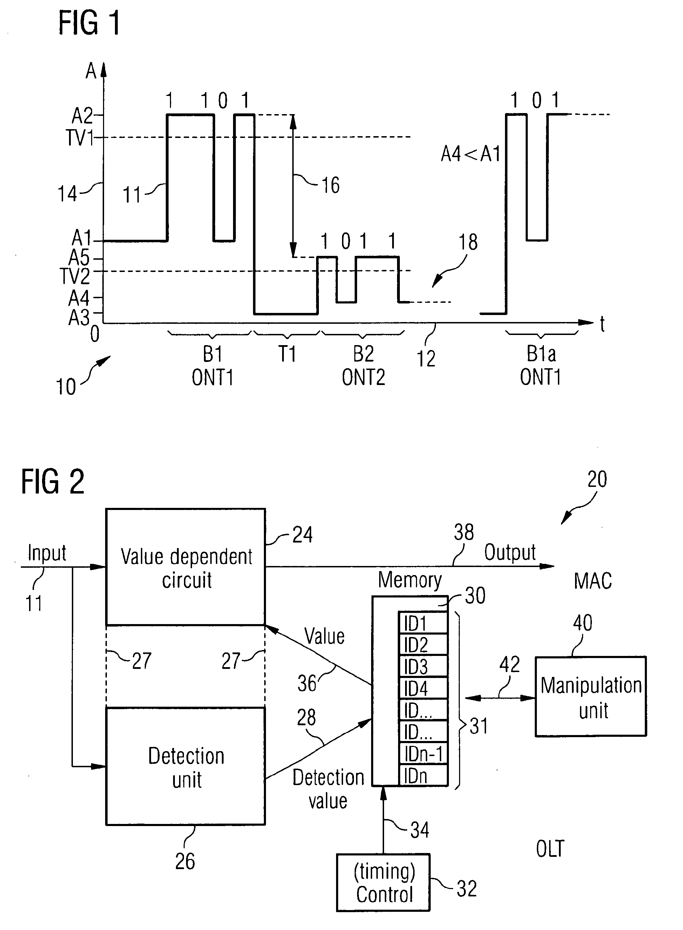

Figure 1 illustrates signals 11 received in a receiver of an optical line termination (OLT) in a passive optical network in a coordinate system 10. An x-axis 12 shows time t. An y-axis 14 shows logarithmically a level A of the received signals, for instance of signal voltage in decibel.

The signal 11 is an electrical signal that results from an optical signal that is converted in a transducer of the receiver. The signal 11 contains bursts B1, B2 etc. transmitted in a time division multiplex scheme. There are transmission pauses between two successive bursts, see for instance pause T1 between burst B1 and burst B2. In the embodiment each burst contains four data bits modulated by a NRZ (no return to zero) modulation. In practice a burst will contain more than four data bits.

A first burst B1 from a first optical network termination ONT1 or from a fist subscriber has a comparably high signal level. The burst B1 contains the data bit sequence 1101. A maximum signal level A2 of the burst B1 is much higher than a minimum signal level A1 of the burst B1. A threshold value TV1 for a comparator is between the levels A1 and A2. The threshold value TV1 results in a reliable detection of the data, even if the signal is much more distorted than shown in figure 1.

In the transmission pause T1 there is a very low signal level A3. After the transmission pause T1 the burst B2 follows that was transmitted by a second optical network termination ONT2, i. e. from a second subscriber. The burst B2 contains four data bits 1011 and a lower signal level compared with burst B1. A maximum signal level A5 of burst B2 may be higher than a minimum signal level A4 of the burst B2. A threshold value TV2 for comparator is between the levels A4 and A5. Nevertheless, the maximum level A5 is smaller than the minimum level A1. Therefore, the threshold value has to be adjusted between the bursts B1 and B2. An arrow 16 shows the difference between the maximum A2 and the maximum A5. This difference may more than 15 dB or even more than 20 dB.

After the transmission of burst B2, there are much more bursts 18 from other subscribers. Then the cycle of bursts is repeated, starting with a burst B1a from ONT1. Burst B1a has approximately the same signal level as burst B1 but usually contains another data sequence, for instance 101...

Figure 2 illustrates an output part 20 of a receiver that receives signal 11 of figure 1 after optional preamplification and/or optional low pass filtering. The output part comprises:
- a value dependent circuit 24, in the embodiment for instance a limiter amplifier,
- a detection unit 26,
- a memory 30,
- a control unit 32, and
- optionally a manipulation unit 40.

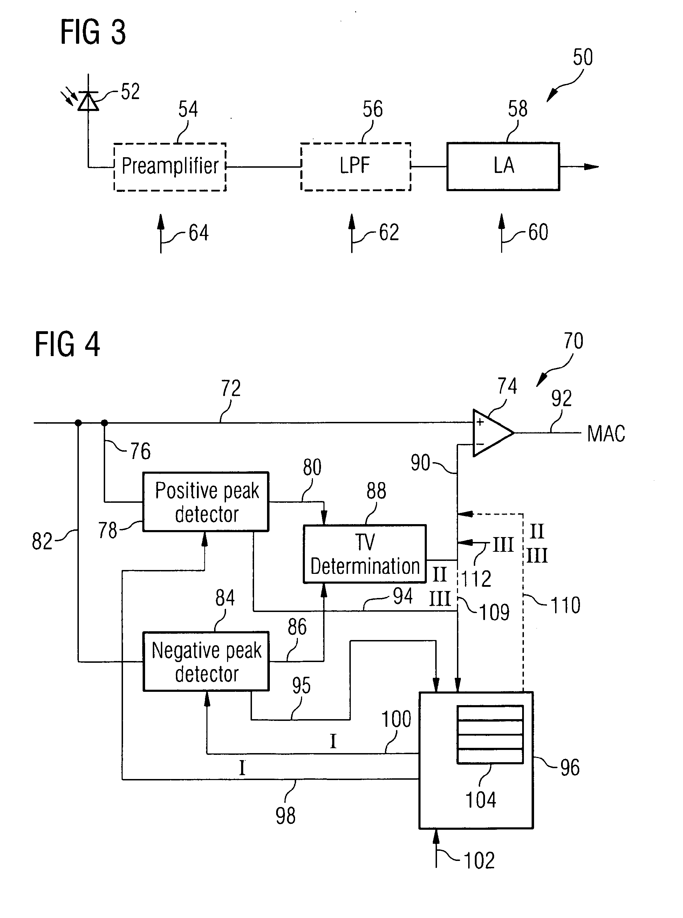

The input signal 11 is connected to an input of the circuit 24 and to an input of the detection unit 26. In some embodiments it may be possible, that the detection unit 26 is part of the circuit 24, see for instance figure 4, I. This is indicated by dashed lines 27.

The value dependent circuit 24 processes the input signal 11 in a predetermined way. It is possible, for instance, to perform a threshold decision combined with an optional amplification. This is also known as limiter amplification. Other processing methods are possible as well.

The detection unit 26 detects a characteristic feature of the input signal 11 or a parameter of the value dependent circuit 24 that is dependent on the input signal. Both cases are explained in more detail below with reference to figure 4. The detection unit 26 outputs a detection value or a detection signal 28 to a memory. Usually, there is an analogue to digital converter between detection unit 26 and memory 30.

Memory unit 30 comprises a plurality of memory cells 31. Each memory cell is associated to one optical network termination ONT1, ONT2 etc. It is possible to associate the ONTs to the memory cells by address mapping, i. e. address ADR1 for ONT1, address ADR2 for ONT2 and so on. The values of the addresses ADR1, ADR2 may form a sequence of increasing or decreasing address values. Alternatively, other association schemes are possible, for instance by storing identification data ID1 to IDn together with the detected values, where n is a natural number and equals the number of involved ONTs.

The association is controlled by the control unit 32, especially the timing of the storing and reading of the detected values. Control unit 32 may comprise a processor or may be a circuitry without a processor.

Memory unit 30 outputs an adjustment signal 36 or an adjustment value. The adjustment signal 36 influences the processing of the value dependent circuit 24. If the detection unit 26 is part of the value dependent circuit adjusting of the detection unit is also possible.

The value dependent circuit 24 outputs an output signal 38 that can be processed further. In the embodiment the output signal 28 is a digital signal. For instance a medium access (MAC) processing may follow. After this the signals may be converted to Ethernet signals, to analogue video signals and/or telephone signals.

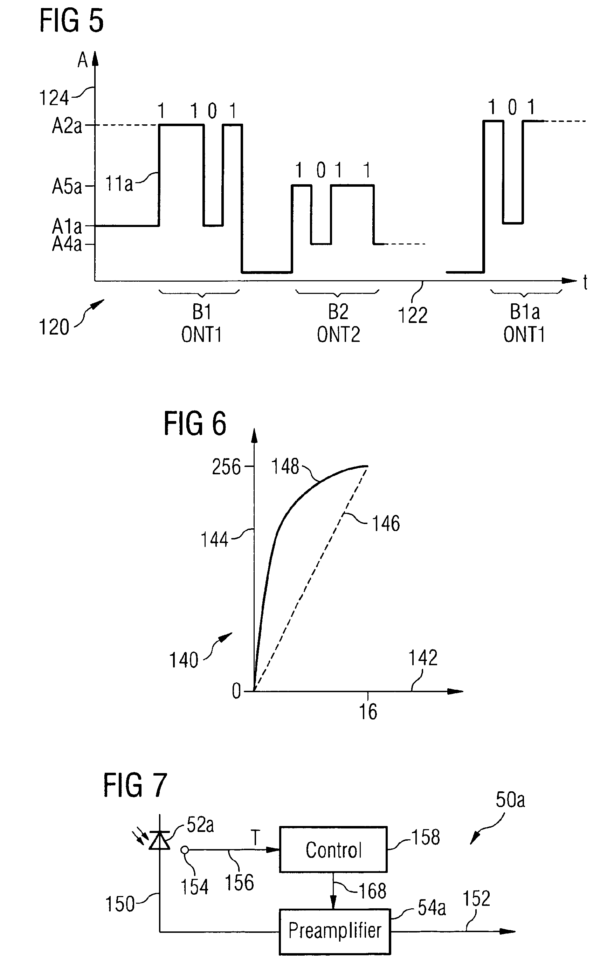

The optional manipulation unit 40 may manipulate the detected values before and/or after storing this values in the memory 30, see arrow 42. It is, for instance, possible to calculate new threshold values according to a predetermined method. Furthermore, it is possible to calculate values of another type with the help of the detected values. This is explained in more detail below with reference to figure 4, embodiment III. Further possibilities for manipulation are described with reference to Figures 5 to 7 below.

Figure 3 illustrates further embodiments of receivers. A receiver 50 includes a photo diode 52, for instance a pin diode. The anode of the diode 50 may be connected to an optional preamplifier 54 or directly to an optional low pass filter 56 or directly to the input of a limiter amplifier 58.

The structure and function of the limiter amplifier 58 may correspond to the structure and function of output part 20. More details of one embodiment of a limiter amplifier 58 are shown in figure 4 below. Other embodiments of limiter amplifiers 58 are of course possible. Known limiter amplifiers are modified to adjust the limiter amplifier according to the invention, see arrow 60.

Furthermore, it is possible to adjust the low pass filter 56 depending on the stored values. This may be done additionally or instead of adjusting limiter amplifier 58 depending on stored values. The low pass filter 56 may comprise one capacitor or at least two capacitors connected in series. Furthermore, there may be one switch or more than one switch to short-circuit some or all of the capacitors depending on the stored values. Thus it is possible to adjust the time constant of the low pass filter. Alternatively or additionally it is possible to adjust a resistor value of the low pass filter 56. This will also influence the time constant that calculates according to R (Resistance) · C (Capacitance).

In a next embodiment the preamplifier 54 is adjusted depending on the stored values. This can be done alternatively or additionally to the adjustment of the low pass filter 56 and/or to the adjustment of the limiter amplifier 58. It is possible, for instance, to adjust the amplification factor of the preamplifier 54. One way for adjusting of the amplification factor is to change the value of a resistor in the loop back branch of the amplifier depending on the stored values.

Figure 4 illustrates a limiter amplifier 70 that comprises:
- a comparator 74, for instance on the basis of a differential amplifier,
- a maximum peak detector 78,
- a minimum peak detector 84,
- a threshold value determination unit 88,
- a memory unit 96 including a memory 104, and
- a control unit 102.

Implementations are known for comparator 74, a maximum peak detector 78 and a minimum peak detector 84, especially with operational amplifiers or without the use of operational amplifiers. The threshold value determination unit 88 may be a voltage divider in the simplest embodiment consisting of two resistors connected in series. The resistors have equal values of resistance, for instance. The tap of the voltage divider is connected with the negative input of comparator 74.

The input signal 11 or a pre-processed input signal is connected to a positive input of comparator 74 with the help of an input line 72, to an input of the maximum peak detector 78 with the help of an input line 76 and to an input of the minimum peak detector 84 by an input line 82.

The maximum peak detector 78 detects the maximum peak of the actual burst B1, B2 etc., i. e. level A2 for burst B1 and level A5 for burst B2. Detector 78 outputs a maximum peak signal 80 to an input of determination unit 88.

The minimum peak detector 84 detects the minimum peak of the actual burst B1, B2 etc. in the same manner, i. e. level A1 for burst B1 and level A4 for burst B2. Detector 78 outputs a minimum peak signal 86 to an input of determination unit 88.

As mentioned above determination unit 88 determines the mean value of the maximum peak signal 80 and the minimum peak signal 86, i. e. threshold value TV1, TV2 etc. Determination unit 88 outputs a mean value signal 90 to the positive input of the comparator 74.

The comparator 74 compares the values of its inputs and outputs a large positive value if input signal 72 is higher than threshold value TV1, TV2 etc. If input signal 72 is lower than the respective threshold value TV1, TV2 etc. a low positive value is created at the output of comparator 74.

According to an embodiment of the invention the limit amplifier 70 is adjusted depending on values stored in memory 96. In an embodiment I, a pair of values is originated from the charging of a capacitor in the maximum peak detector 78 and from the charging of a capacitor in the minimum peak detector. The capacitors are used for determining the peak values. The charge can be determined by detecting a voltage on the capacitor at the end of a transient phase. The voltage may be converted to a digital value. Then the digital value is stored in memory 104, see memory input 94, 95. With the next burst of the same ONT, the stored values will be read from the memory 104 and will be converted back to analogue voltage signals that are used to precharge the respective capacitor, see memory outputs 98 and 100. Therefore, the transient phase will be much shorter than the first time. Nevertheless, adaptation within one burst is still possible. The control unit 102 controls the appropriate timing for the adjustment.

In an embodiment II memory inputs 94, 95 are used but memory outputs 98, 100 and determination unit 88 are omitted. The threshold values TV1, TV2 and so on are calculated from the detected charge values and used for the negative input of comparator 74 after an initial phase of one burst cycle, for instance, see memory output 110. Adaptation is possible between successive burst cycles.

According to an embodiment III memory inputs 94, 96 and memory outputs 98, 100 are not used. A memory input 109 that originated from the output of determination unit 88 is used instead. In other words, threshold values TV1 and TV2 etc. are stored in memory 104. Memory output 110 is connected to the negative input of comparator 90. After an initial cycle, adaptation is possible from burst cycle to burst cycle. In the initial phase it is possible to connect the output of determination unit 88 directly to the negative input of the comparator 90. After the initial phase this connection is disconnected.

Figure 5 illustrates manipulation depending on the signal level. Figure 5 is similar to figure 1. Therefore mainly the differences are described. Figure 5 illustrates signals 11a received in a receiver of an optical line termination (OLT) in a passive optical network in a coordinate system 120. An x-axis 122 shows time t. An y-axis 144 shows logarithmically a level A of the received signals, for instance of signal voltage in decibel. The curve of signal 11a resembles the curve of signal 11 but this time the amplification of the preamplifier was manipulated according to the stored value. Therefore two control loops are overlaid. The reference value for the control loop is raised for low signal levels, see values A4a and A5a that are higher than A4 and A5, respectively. For high signal levels the reference value is decreased, see values A1a and A2a that are lower than values A1 and A1, respectively.

Figure 6 illustrates manipulation by mapping. A coordinate system 140, has an x-axis 142 for the mapped values and an y-axis for the detected values. In the example the x-values have four bits, i.e. fewer bits, than the y-values which have eight bits. It is possible to use a linear mapping function, see line 146. In this case only a compression is achieved. Alternatively it is possible to use a non linear mapping function, see curve 148. Non linear function are also used if no compression is performed. Furthermore, it is possible to switch between two or more mapping functions depending on a predetermined parameter, for instance a parameter of the input signal (before or after an optional pre amplification) or a parameter of the receiver. Examples of parameters are:
- the temperature of diode 52, see also figure 7,
- the length of a burst B1, B2, etc.
- the level of the signals 11, 72,
- the value of the threshold values TV.

Figure 7 illustrates a manipulation depending on temperature T of a diode 52a. Figure 7 shows a receiver 50a that resembles receiver 50 shown in figure 3. A receiving diode 52a is connected via a connection line 150 to a preamplifier 54a. An output line 152 is connected to the output of preamplifier 54a. A temperature sensor 154 senses the temperature of diode 52a. The temperature sensor 154 is connected to an input of a control unit 158. an output of control unit 158 is connected to an adjusting input of the preamplifier.

The amplification of the amplifier is adjusted using stored values as described above. Furthermore, the values are manipulated depending on the temperature T of the diode 52a. It is possible to decrease the amplification if temperature is high. Contrary, the amplification factor may be raised if diode 52a has a low operation temperature.

Therefore, a method for optimising the function of a limiter amplifier for an optical receiver in passive optical networks (PON) is given.

In the PON data is transmitted in the form of bursts from the subscriber devices or user devices, i. e. an optical network terminations (ONT), to a central unit that is called an optical line termination (OLT). This direction of data transfer is called the upstream direction.

The ONTs may divide the transmitting time among each other in accordance with the defaults given from the OLT. There are pauses between the sending of the single ONTs to prevent overlapping. Furthermore, the signal levels received at the OLT may be different from each other.

The optical receiver of the OLT always has to adapt to the different receiving levels. Furthermore, the signal level changes between a level for darkness and a maximum level. This process is very fast.

It may be possible to use the following mechanism in the receiver for adapting a threshold value for the limiter amplifier. The mechanism could include a detection device or even a measuring device for determining the signal levels. Furthermore, the mechanism could include a control unit and the limiter amplifier. The current threshold value could be set back in every data burst to achieve the timing conditions. Nevertheless, the reachable bit rate may not be large enough. Furthermore, there may be an insufficient "eye diagram" and therefore too many transmission errors or a high bit error rate (BER).

Therefore, the mechanism for the adaptation of the threshold values may be as follows. The necessary threshold shall not or at least not completely be determined by a transient phase. This can be achieved because the OLT knows from which ONT the next data burst is coming. Therefore the OLT, i. e. the detection device in the OLT, determines the received signal level for each burst. The determined values are digitalized and saved. A saved value can then be assigned to the corresponding ONT from which the current burst has come, because it is known in each case from which ONT the burst has come. All values are saved in a memory side by side and assigned to the corresponding ONTs.

The values may be processed before saving or after reading them. Alternatively, no additional processing is performed. The saved values are then loaded directly in the limiter amplifier and used there with preview to the burst that will come from the corresponding ONT. No transient phase or only a short transient phase is necessary.

The method may be improved by preloading the memory with empirical values or with values from the usually employed adjustment function of the ONT.

Furthermore, the loading of new threshold memory values may be done with further manipulations during operation.

### List of reference signs

- 10: system of coordinates
- 11: signal
- 12: x-axis
- 14: y-axis
- 16: arrow
- A1: to A5 signal level
- TV1,: TV2 threshold value
- B1,: B2 burst
- B1a: burst
- T1: pause
- 18: arrow
- 20: output part of a receiver
- 24: adjustable circuit
- 26: detection unit
- 27: dashed line
- 28: detection signal
- 30: memory
- 31: memory cell
- 32: control unit
- 34: timing
- 36: adjustment signal
- 38: output signal
- 40: manipulation unit
- 42: arrow
- ID0: to IDn identification data
- n: number of sources
- 50,: 50a receiver
- 52,: 52a photo diode
- 54,: 54a preamplifier
- 56: low pass filter
- 58: limiter amplifier
- 60: to 64 adjustment signals
- 70: limiter amplifier
- 72: input signal
- 74: comparator unit
- 76: input line
- 78: maximum peak detector
- 80: maximum peak signal
- 82: input line
- 84: minimum peak detector
- 86: minimum peak signal
- 88: threshold determination unit
- 90: mean value signal
- 92: output signal
- 94,: 95 memory input
- 96: memory
- 98,: 100 memory output
- 102: control signal
- 109: memory input
- 110: memory output
- 112: disconnection
- OLT: optical line termination
- ONT1,: ONT2 optical network termination
- 120: system of coordinates
- 122: x-axis
- 124: y-axis
- 140: system of coordinates
- 142: x-axis
- 144: y-axis
- 146: linear mapping curve
- 148: nonlinear mapping curve
- 150,: 152 connection
- 154: temperature sensor
- 156: connection
- 158: control unit
- 160: connection

## Claims

1. Receiver (20, 50, 70) for receiving optical signals from different sources (ONT1, ONT2),
comprising:
a transducer unit (52) that receives optical signals from at least two sources (ONT1, ONT2) and that changes the received optical signals to electrical input signals (11, 72),
a detection unit (26, 78, 84) that detects values from the input signals (11, 72),
a memory unit (30, 104) that stores the detected values or values depending on the detected values,
an adjustable unit (24, 74) that processes the electrical input signals (11, 72) depending on the stored values,
and a control unit (32, 102) that controls the reading or storing of values from or to the memory unit (30, 104) corresponding to the signal source (ONT1, ONT2) from which the current input signal (11, 72) has come.

2. Receiver (20, 50, 70) according to claim 1, wherein the adjustable unit (70) comprises a limiter amplifier or is a limiter amplifier.

3. Receiver (20, 50, 70) according to claim 2, wherein the adjustable unit (70) comprises a comparator (74), a maximum peak detector (78), a minimum peak detector (84) and a mean value detector (88),
an input signal line (72, 76, 82) is connected to an input (+) of the comparator (74), to an input of the maximum peak detector (78) and to an input of the minimum peak detector (84),
an input of the mean value detector (88) is connected to an output of the maximum peak detector (78) and another input of the mean value detector (88) is connected to an output of the minimum peak detector (84),
another input (-) of the comparator (74) is connected to an output of the mean value detector (88).

4. Receiver (20, 50, 70) according to claim 3, wherein the maximum peak detector (78) comprises a first capacitor and
wherein the minimum peak detector (84) comprises a second capacitor,
the control unit (102) controls the precharging of the first capacitor and of the second capacitor depending on the stored values (98, 100, I, II).

5. Receiver (20, 50, 70) according to claim 2, wherein the adjustable unit comprises a comparator (74), a maximum peak detector (78), a minimum peak detector (84) and a mean value detector (88),
an input signal line (72, 76, 82) is connected to an input (+) of the comparator (74), to an input of the maximum peak detector (78) and to an input of the minimum peak detector (84),
an input of the mean value detector (88) is connected to an output of the maximum peak detector (78) and another input of the mean value detector (88) is connected to an output of the minimum peak detector (84),
an output of the mean value detector (88) is connected to an input of the memory unit (96, 104),
another input (-) of the comparator is connected (III, III) to an output of the memory unit (96, 104).

6. Receiver (20, 50, 70) according to one of the preceding claims, wherein the receiver includes a preamplifier (54) and wherein the preamplifier (54) comprises the adjustable unit or is the adjustable unit.

7. Receiver (20, 50, 70) according to one of the preceding claims wherein the receiver comprises a low pass filter (56) and wherein the adjustable unit (56) comprises the low pass filter (56) or is the low pass filter (56).

8. Receiver (20, 50 ,70) according to one of the preceding claims, wherein the memory unit (30, 96, 104) comprises a digital memory (30, 96) or is a digital memory (30, 96).

9. Receiver (20, 50 ,70) according to one of the preceding claims, comprising a manipulation unit (40, 158) that maps the detected values or the stored values according to a predetermined mapping function to create mapped values that are stored in the memory unit or that are used directly for the adjustment of the adjustable unit (24, 74, 54a).

10. Receiver (20, 50 ,70) according to claim 9, wherein the mapping comprises a compression of the values.

11. Receiver (20, 50 ,70) according to claim 9 or 10, wherein the mapping function is a nonlinear function.

12. Receiver (20, 50 ,70) according to one of the claims 9 to 10, wherein the mapping function changes depending on the input signals (11, 72).

13. Receiver (20, 50 ,70) according to claim 12, wherein the mapping function changes depending on at least one of:
the length of bursts in the input signal (11, 72),
the signal level of the input signals (11, 72).

14. Receiver (20, 50 ,70) according to one of the claims 9 to 10, wherein the mapping function changes depending on parameters of the receiver (20, 50 , 70).

15. Receiver (20, 50 ,70) according to claim 14, wherein the mapping function changes depending on at least one of:
the temperature of a receiving element (52, 52a),
the surrounding temperature of the receiver (20, 50 ,70).

16. Method for receiving optical signals from different sources (ONT1, ONT2), comprising:
receiving a first optical signal from a first signal source (ONT1),
transducing the first optical signal to a first electrical input signal (B1),
determining a first value (TV1) depending on the first input signal (B1),
storing the first value (TV1),
receiving a second optical signal from a second signal source (ONT2) after receiving the first signal,
transducing the second optical signal to a second electrical input signal (B2),
receiving a third optical signal from the first source (ONT1) after receiving the second optical signal,
transducing the third optical signal to a third electrical input signal (B1a),
using the first value (TV1) for processing the third input signal (B1a).

17. Method according to claim 16, wherein the first value is a precharge voltage for a capacitor or a threshold value (TV1) for a comparator (74) or an amplification factor for a preamplifier (54).

18. Method according to claim 16 or 17, wherein a second value (TV2) is determined by the second signal (B2),
and wherein the second value (TV2) is stored in a memory unit (30).

19. Method according to one of the claims 16 to 18, wherein units of a receiver according to one of the claims 1 to 15 are used, especially in a passive optical network.
